(19) Europäisches Patentamt
European Patent Office
Office européen des brevets

(11) **EP 4 242 262 A1**

(12) **EUROPEAN PATENT APPLICATION**
published in accordance with Art. 153(4) EPC

(43) Date of publication:
**13.09.2023 Bulletin 2023/37**

(21) Application number: **22887319.6**

(22) Date of filing: **31.08.2022**

(51) International Patent Classification (IPC):
***C08L 23/06*** *(2006.01)* ***C08K 5/10*** *(2006.01)*
***C08K 5/098*** *(2006.01)* ***C08F 10/02*** *(2006.01)*
***C08F 4/6592*** *(2006.01)* ***C08J 5/18*** *(2006.01)*

(52) Cooperative Patent Classification (CPC):
**C08F 4/6592; C08F 10/02; C08J 5/18; C08K 5/098; C08K 5/10; C08L 23/06**

(86) International application number:
**PCT/KR2022/013030**

(87) International publication number:
**WO 2023/075115 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2021 KR 20210142954**
**29.08.2022 KR 20220108434**

(71) Applicant: **LG CHEM, LTD.**
**Yeongdeungpo-gu,**
**Seoul 07336 (KR)**

(72) Inventors:
- **JEONG, Hyun Mook**
  **Daejeon 34122 (KR)**
- **KIM, Dodam**
  **Daejeon 34122 (KR)**
- **CHOI, Yi Young**
  **Daejeon 34122 (KR)**
- **OH, Hee Su**
  **Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE RESIN COMPOSITION AND FILM COMPRISING SAME**

(57) The present disclosure relates to a polyethylene resin composition capable of improving transparency and moisture barrier properties without deterioration in physical properties of a film, and a film including the same.

【FIG. 1】

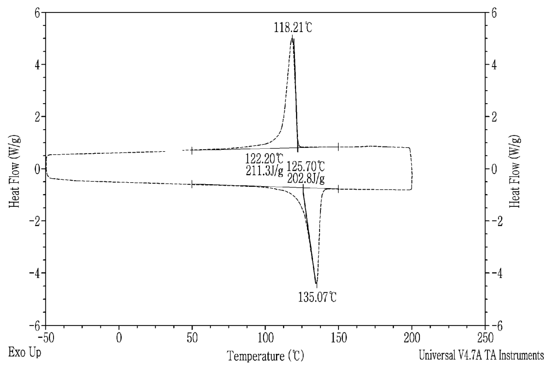


EP 4 242 262 A1

## Description

[TECHNICAL FIELD]

**CROSS CITATION WITH RELATED APPLICATION(S)**

This application claims the benefits of Korean Patent Applications No. 10-2021-0142954 filed on October 25, 2021 and No. 10-2022-0108434 filed on August 29, 2022 with the Korean Intellectual Property Office, the disclosure of which is incorporated herein by reference in its entirety.

The present disclosure relates to a polyethylene resin composition capable of improving transparency and moisture barrier properties without deterioration in physical properties of a film, and a film including the same.

[BACKGROUND OF ART]

Recently, in order to improve recycling rates of food packaging materials and pouches, the use of polyethylene film (All-PE film) such as linear low-density polyethylene (LLDPE), low-density polyethylene (LDPE), medium-density polyethylene (MDPE), and high-density polyethylene (HDPE) instead of the conventionally used aluminum foil, nylon, or polyethylene terephthalate (PET) has been increasing.

In order to use HDPE in a film for food packaging, transparency should be improved so that the freshness and condition of food can be checked. In this regard, a method of using a mixture of low-density polyethylene such as LLDPE has been proposed, but in this case, the density of the film is lowered, and there is a problem in that stiffness or tear strength of the film is decreased.

Accordingly, it is necessary to develop a method capable of increasing transparency without degrading physical properties of the film.

Meanwhile, in order to facilitate recycling, moisture and oxygen barrier properties of the film should be increased. Among polyethylene, HDPE has the highest density and has many crystalline regions, so it is more advantageous in blocking the movement of oxygen or moisture. Accordingly, HDPE can function as a barrier film that blocks moisture and oxygen permeation.

However, HDPE has a disadvantage in that it has high moisture barrier properties, that is, WVTR (water vapor transmission rate, $mg/m^2 \cdot day$), compared to the conventionally used aluminum foil or nylon. Accordingly, several methods have been studied such as increasing the density of HDPE, increasing crystallinity to make moisture permeation difficult, or improving WVTR by increasing medium/low molecular weight content. However, when the density or MI of HDPE is increased, the moisture barrier properties of the film are increased, but there is a problem in that film processability is lowered, and transparency and stretchability of the film to be prepared are deteriorated.

In order to solve this problem, research is being conducted to increase the crystallinity at the same density by adding a nucleating agent such as glycerol alkoxide salts, hexahydrophthalic acid salts, and zinc glycerolate, or to increase the moisture barrier properties and transparency by adjusting crystal directions. However, it is difficult to obtain a satisfactory effect only by using the nucleating agent. Further, since the WVTR and haze of the film are sufficiently improved when the nucleating agent is added at least 1,000 ppm, there is a problem of an increase in the manufacturing cost of the film.

Accordingly, it is necessary to develop a method capable of improving WVTR and haze while reducing the amount of nucleating agent added in the preparation of a film using HDPE.

[DETAILED DESCRIPTION OF THE INVENTION]

[Technical Problem]

The present disclosure relates to a polyethylene resin composition capable of improving transparency and moisture barrier properties without deterioration in physical properties of a film.

The present disclosure relates to a film capable of exhibiting transparency and moisture barrier properties without deterioration in physical properties by using the polyethylene resin composition.

[Technical Solution]

In the present disclosure, there is provided a polyethylene resin composition including a polyethylene satisfying the following conditions (a1) and (a2); a nucleating agent; and a lubricant;
wherein the nucleating agent and the lubricant contain a cation of the same metal, the metal is selected from the group consisting of Group 2 and Group 12 metals, the cation of the metal is contained in an amount of 500 to 2,500 ppm based

on a total weight of polyethylene, and Tc-onset (onset transition temperature) is higher than 120 °C:

(a1) density measured at 23 °C according to the ISO 1183-2 method: more than 0.960 g/cm$^3$ and 0.975 g/cm$^3$ or less, and

(a2) melt index measured at 190 °C under a load of 2.16 kg according to the ISO 1133 method: 0.72 to 1.2 g/10min.

In the present disclosure, there is also provided a film including the above-described polyethylene resin composition.

[ADVANTAGEOUS EFFECTS]

The polyethylene resin composition according to the present disclosure can simultaneously improve transparency and moisture barrier properties without deterioration in film properties, because crystallinity is increased by a nucleating agent and crystal arrangement becomes uniform by the combination of a nucleating agent and a lubricant in the preparation of a film.

[BRIEF DESCRIPTION OF THE DRAWINGS]

FIG. 1 is a graph showing a DSC curve in the second run when analyzing the polyethylene resin composition of Example 6 using a differential scanning calorimeter (DSC).

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include" , "comprise" , or "have" when used in this disclosure, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, a polyethylene resin composition, a preparation method thereof, and a film prepared using the same according to specific embodiments of the present invention will be described.

In the present disclosure, when preparing a film using high-density polyethylene (HDPE), which exhibits excellent oxygen and moisture barrier properties due to its high density and many crystalline regions, but low transparency, metal cations contained in the nucleating agent and lubricant and a content thereof are simultaneously controlled. Accordingly, it is possible to increase the crystallinity and the uniformity of crystal arrangement in the film, and as a result, transparency and moisture barrier properties can be improved without deterioration in film properties.

Specifically, the polyethylene resin composition according to the present disclosure includes a polyethylene satisfying the following conditions (a1) and (a2); a nucleating agent; and a lubricant; wherein the nucleating agent and the lubricant contain a cation of the same metal, the metal is selected from the group consisting of Group 2 and Group 12 metals, and the cation of the metal is contained in an amount of 500 to 2,500 ppm based on a total weight of polyethylene. Herein, Tc-onset (onset transition temperature) measured by a differential scanning calorimetry is higher than 120 °C:

(a1) density measured at 23 °C according to the ISO 1183-2 method: more than 0.960 g/cm$^3$ and 0.975 g/cm$^3$ or less, and

(a2) melt index measured at 190 °C under a load of 2.16 kg according to the ISO 1133 method: 0.72 to 1.2 g/10min.

The present inventors have found that metal cations contained in the nucleating agent and lubricant, among common additives used in polyethylene resin compositions, affect crystallinity and crystal arrangement in the preparation of polyethylene films. They have also found that, in particular, when there is no difference in the size of metal cations contained in the two materials, that is, when the cations of the same metal are contained, the crystallinity of the film and the uniformity of the crystal arrangement are greatly increased, and as a result, transparency and moisture barrier properties of the film are greatly increased, thereby completing the present invention.

Specifically, the metal cations contained in the nucleating agent and the lubricant act as a nucleation point when the temperature of polyethylene is gradually lowered from a temperature higher than the melting point to reach the crystallization temperature, thereby making the size of the polymer crystal dense, and at the same time increasing the crystallinity. In addition, since the metal cations exist in the form of divalent cations, they are separated into two fatty acids at a temperature above the melting point of polyethylene, and can be combined with a fatty acid or a polymer at a temperature below the melting point of polyethylene. When combined with the crystallized polymer ends, it is possible to form a crystal structure with a uniform distance between crystals and to prevent the formation of ultrahigh molecular weight polymers, thereby improving transparency of the film, i.e., haze properties, and moisture barrier properties, i.e., WVTR. However, if the diameter difference between the metal cations contained in the nucleating agent and the metal cations contained in the lubricant is large, the distance difference between the crystals increases and the uniformity of the crystal structure is reduced. As a result, visible light transmission is disturbed, and the crystal structure is not densely formed, so that the transparency and moisture barrier properties of the film are deteriorated.

In the polyethylene resin composition according to the present disclosure, the metal in the metal cation contained in the nucleating agent and the lubricant may be a metal element selected from the group consisting of an alkaline earth metal of Group 2 and a transition metal of Group 12 in the periodic table. Among various metal elements, these metal elements are advantageous to be prepared in the form of hydroxide, and they have divalent cations and thus are easily combined in the form of fatty acids and fatty acid salts having OH- groups such as stearates. In addition, fatty acid salts prepared through the corresponding metal elements have a melting point of 125 to 130 °C, which is similar to or slightly higher than the melting point of polyethylene. As a result, the liquid polyethylene is crystallized together with the nucleating agent during the crystallization process, and thus the uniformity of the crystal arrangement can be increased and the crystallinity can be increased in the preparation of a film. More specifically, the metal may be Mg, Ca, Sr, Ba, Cd or Zn, and more specifically, may be Ca, Mg, or Zn.

In the polyethylene resin composition according to the present disclosure, the nucleating agent may be a hexahydrophthalate-based compound (or, a metal salt compound of hexahydrophthalic acid) containing a cation of a Group 2 or 12 metal. These compounds promote the crystallization rate of the polymer in the preparation of a film to increase crystallinity while making the crystal size dense to form a dense crystal structure. As a result, along with the improvement of mechanical properties of the film, the transparency and moisture barrier properties of the film can be greatly improved.

More specifically, the nucleating agent may be a compound represented by the following Chemical Formula 1:

[Chemical Formula 1]

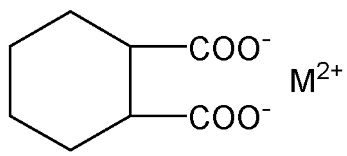

in Chemical Formula 1, M may be an alkaline earth metal of Group 2 or a transition metal of Group 12. More specifically, M may be Ca, Mg, Ba, Cd or Zn, and more specifically, may be Ca, Mg or Zn.

Specific examples of the nucleating agent include, but are not limited to, calcium hexahydrophthalate, zinc hexahydrophthalate, magnesium hexahydrophthalate, and the like.

In addition, the lubricant may be a $C_{12-30}$ fatty acid salt containing a cation of a Group 2 or 12 metal, and more specifically, a fatty acid salt containing a cation of a Group 2 or 12 metal. More specifically, it may be a stearate-based compound containing a cation of a Group 2 or 12 metal, or a palmitate-based compound containing a cation of a Group 2 or 12 metal. In addition, in the cation of the metal, the metal may be more specifically Ca, Mg, Ba, Cd or Zn, and more specifically, may be Ca, Mg or Zn. These compounds are kneaded with polyethylene to lower the melt viscosity of the resin composition, thereby improving flowability and consequently improving molding processability. In addition, the lubricant improves dispersibility of the nucleating agent in the resin composition so that the nucleating agent acts uniformly in the resin composition. As a result, uniform crystallization and formation of a crystal arrangement are possible, thereby improving the transparency and moisture barrier properties of the film.

Specific examples of the lubricant include, but are not limited to, calcium stearate, zinc stearate, magnesium stearate, calcium palmitate, zinc palmitate, magnesium palmitate, and the like.

In the present disclosure, the nucleating agent and the lubricant have the same metal cations in the compound. For example, when the nucleating agent is calcium hexahydrophthalate, the lubricant may include at least one of calcium stearate or calcium palmitate; and when the nucleating agent is zinc hexahydrophthalate, the lubricant may include at least one of zinc stearate and zinc palmitate.

In addition, the present disclosure can further improve the transparency and moisture barrier properties of the film by controlling the content of metal cations in the nucleating agent and lubricant as well as the type thereof.

Specifically, the metal cations derived from the nucleating agent and the lubricant may be included in an amount of 500 to 2,500 ppm based on the total weight of polyethylene. When the content of the metal cations in the polyethylene resin composition is less than 500 ppm, the effect of improving the crystallinity and the uniformity of crystal arrangement is insignificant, and when it exceeds 2,500 ppm, the metal cations are leached to reduce smoothness of the film surface or become a source of contamination to reduce transparency. More specifically, the metal cations derived from the nucleating agent and the lubricant may be included in an amount of 500 ppm or more, 700 ppm or more, 750 ppm or more, 760 ppm or more, 800 ppm or more, 1,000 ppm or more, or 1,100 ppm or more, and 2,500 ppm or less, 2,000 ppm or less, 1,800 ppm or less, 1,700 ppm or less, 1,600 ppm or less, or 1,560 ppm or less based on the total weight of polyethylene.

In addition, when only the nucleating agent is included without the lubricant, even if the content of metal cations derived from the nucleating agent satisfies the above range, the nucleating agent is not evenly dispersed due to the absence of the lubricant, making it difficult to uniformly crystallize and form a crystal arrangement, and as a result, processability during film molding and transparency may be reduced. In addition, when only the lubricant is included without the nucleating agent, even if the content of metal cations derived from the lubricant satisfies the above range, the crystallinity is reduced due to the absence of the nucleating agent, and it is difficult to form a dense crystal structure, thereby reducing the transparency and moisture barrier properties of the film.

Meanwhile, in the present disclosure, the content of metal cations means the total content of metal cations derived from the nucleating agent and lubricant contained in the polyethylene resin composition, and can be measured by quantitative analysis of inorganic trace elements through ICP-OES or ICP-MS. Specific analysis methods and conditions will be described in detail in Test Examples below.

In addition, under the conditions satisfying the content of metal cations, the nucleating agent may be included in an amount of 100 to 1,000 ppm based on the total weight of polyethylene, and the lubricant may be included in an amount of 200 to 1,500 ppm based on the total weight of polyethylene.

When the content of the nucleating agent is less than 100 ppm based on the total weight of polyethylene, the effect of increasing the crystallinity is not sufficient, and when it exceeds 1,000 ppm, there is a risk of lowering the transparency of the film due to leaching of metal cations. More specifically, the content of the nucleating agent may be more than 100 ppm, 300 ppm or more, 400 ppm or more, 420 ppm or more, 600 ppm or more, or 720 ppm or more, and 1,000 ppm or less, 950 ppm or less, or 920 ppm or less based on the total weight of polyethylene.

In addition, when the content of the lubricant is less than 200 ppm based on the total weight of polyethylene, the effect of improving the flowability of the resin composition and thus improving the molding processability is not sufficient, and when it exceeds 1,500 ppm, there is a risk of a decrease in film transparency and a pinking phenomenon on the film surface (a phenomenon in which the film appears red) due to leaching of metal cations. More specifically, the content of the lubricant may be 200 ppm or more, 210 ppm or more, 300 ppm or more, 400 ppm or more, 450 ppm or more, or 480 ppm or more, and 1,500 ppm or less, 1,200 ppm or less, 1,000 ppm or less, 800 ppm or less, 700 ppm or less, or 680 ppm or less based on the total weight of polyethylene.

In addition, the nucleating agent and the lubricant may be included in a weight ratio of 3:1 to 1:1 within the above-described content ranges. When the nucleating agent and the lubricant are included to further satisfy the above-mentioned mixing ratio under the conditions satisfying the content range of metal cations contained in the nucleating agent and lubricant, transparency may be further improved without concerns about a decrease in the smoothness of the film surface and a pinking phenomenon of the film due to leaching of metal cations. More specifically, the nucleating agent and the lubricant may be included in a weight ratio of 3:1 to 2.5:1, or 2.5:1 to 1:1.

Meanwhile, in the polyethylene resin composition according to the present disclosure, the polyethylene is high-density homopolyethylene (HDPE) having a high density of more than 0.960 g/cm$^3$ and 0.975 g/cm$^3$ or less, more specifically, 0.961 g/cm$^3$ or more and 0.975 g/cm$^3$ or less.

When the density of the polyethylene is 0.960 g/cm$^3$ or less, oxygen and moisture barrier properties are low during the preparation of the polyethylene resin composition, and when it exceeds 0.975 g/cm$^3$, extensibility of the film may be reduced due to the excessively high density. Even more specifically, the polyethylene may have the density of more than 0.960 g/cm$^3$, 0.961 g/cm$^3$ or more, 0.962 g/cm$^3$ or more, or 0.963 g/cm$^3$ or more, and 0.975 g/cm$^3$ or less, 0.970 g/cm$^3$ or less, 0.965 g/cm$^3$ or less, or 0.964 g/cm$^3$ or less.

Meanwhile, in the present disclosure, the density of the polyethylene may be measured at 23 °C according to the ISO 1183-2 method.

In addition, the polyethylene exhibits a melt index ($MI_{2.16}$) of 0.72 to 1.2 g/10min with the high density as described above.

The melt index of polyethylene affects processability and dimensional stability of the resin composition. When $MI_{2.16}$ is less than 0.72 g/10min, processing pressure may increase and thus processability may be deteriorated, and when $MI_{2.16}$ exceeds 1.2 g/10min, bubble stability may be deteriorated due to high flowability, resulting in film thickness

deviation.

In general, the melt index can be adjusted by controlling the type of catalyst and the amount of hydrogen input during the polymerization process, and the amount of hydrogen input is determined according to hydrogen reactivity of the catalyst used. In the present disclosure, a transition metal compound having low hydrogen reactivity is used to reduce the melt index of the polyethylene to be prepared, and as a result, the viscosity in the processing area can be increased to improve dimensional stability. More specifically, the polyethylene may have $MI_{2.16}$ of 0.72 g/10min or more, 0.73 g/10min or more, 0.75 g/10min or more, 0.8 g/10min or more, or 0.82 g/10min or more, and 1.2 g/10min or less, 1.0 g/10min or less, 0.9 g/10 min or less, or 0.85 g/10 min or less.

In the present disclosure, the melt index of the polyethylene can be measured at 190 °C under a load of 2.16 kg according to the ISO 1133 method, and expressed as the weight (g) of the polymer melted for 10 minutes.

In addition, the polyethylene may further satisfy one or both of the following conditions in addition to the density and melt index described above.

(a3) melt flow rate ratio (MFRR, $MI_5/MI_{2.16}$): 3 to 4.5
(a4) molecular weight distribution (PDI): 9 to 11.

Specifically, the polyethylene may exhibit a melt flow rate ratio (MFRR, $MI_5/MI_{2.16}$) of 3 to 4.5.

In general, MFRR is used as a value indicating the effect of shear thinning and is affected by molecular weight distribution and melt index. The polyethylene usable in the present disclosure can exhibit excellent processability by having a melt flow rate ratio within the above range. More specifically, MFRR of the polyethylene may be 3 or more, 3.2 or more, 3.5 or more, or 3.7 or more, and 4.5 or less, 4.2 or less, 4.0 or less, 3.9 or less, or 3.85 or less.

Meanwhile, in the present disclosure, MFRR of the polyethylene is a value obtained by dividing a melt index ($MI_5$) value measured at 190 °C under a load of 5 kg according to the ISO 1133 method by a melt index ($MI_{2.16}$) value measured at 190 °C under a load of 2.16 kg according to the ISO 1133 method.

In addition, the polyethylene may have a molecular weight distribution (PDI) of 9 to 11.

When having a wide molecular weight distribution within the above range in addition to the above-described density and melt index characteristics, the effect of increasing the density and the effect of improving the stiffness can be realized at the same time. More specifically, the polyethylene may have the molecular weight distribution of 9 or more, 9.3 or more, or 9.4 or more, and 11 or less, 10.5 or less, or 10 or less.

Meanwhile, in the present disclosure, the molecular weight distribution of polyethylene is determined by measuring the weight average molecular weight (Mw) and number average molecular weight (Mn) of polyethylene using gel permeation chromatography (GPC), and dividing the weight average molecular weight (Mw) by the number average molecular weight (Mn). The specific measurement methods and conditions are described in Experimental Examples below.

As described above, as the polyethylene satisfies the conditions of high density, MI in the optimum range, and furthermore, MFRR and PDI in the optimum range, it is possible to simultaneously improve the balance between oxygen and moisture barrier properties and processability when preparing the polyethylene resin composition.

Meanwhile, the polyethylene resin composition according to the present disclosure may further include one or more additives such as an antioxidant, a neutralizing agent, a slip agent, an anti-blocking agent, a UV stabilizer, and an antistatic agent in addition to the polyethylene, the nucleating agent and the lubricant. The content of the additive is not particularly limited, and may be, for example, 500 ppm or more, 700 ppm or more, or 1,000 ppm or more, and 2,500 ppm or less, or 1,500 ppm or less, respectively, based on the total weight of polyethylene.

For example, the antioxidant includes a phenolic antioxidant; a phosphorus-based antioxidant; an amine-based antioxidant; and the like, and any one or a mixture of two or more thereof may be used. Specific examples of the antioxidant include a phenolic antioxidant such as pentaerythritol tetrakis[3-(3,5-di-tert-butyl-4-hydroxyphenyl)propionate], and 1,3,5-trimethyl-2,4,6-tris(3,5-di-tert-butyl-4-hydroxybenzyl)benzene; a phosphorus antioxidant such as tris(2,4-di-tert.-butylphenyl) phosphite, bis(2,4-di-tert-butylphenyl)pentaerythritol diphosphite, and bis(2,4-dicumylphenyl)pentaerythritol diphosphate; and an amine-based antioxidant such as phenylnaphthylamine, 4,4'-($\alpha$,$\alpha$-dimethylbenzyl)diphenylamine, and N,N'-di-2-naphthyl-p-phenylenediamine, and any one or a mixture of two or more thereof may be used. Moreover, it is also possible to use Irganox™ 1010 (manufactured by BASF), Irganox™ 3114 (manufactured by BASF), Irganox™ 1076 (manufactured by BASF), Irgafos™ 168 (manufactured by BASF) or Cyanox™ 1790 (manufactured by CYTEC), which satisfies the above structural characteristics and is commercially available. In consideration of the effect of improving film properties, the polyethylene resin composition may include a mixture of a phenolic antioxidant and a phosphorus-based antioxidant. At this time, the mixing ratio may be 7:3 to 3:7, or 7:3 to 5:5.

The polyethylene resin composition according to the present disclosure may be prepared by a preparation method including a step of mixing a polyethylene, a nucleating agent, a lubricant, and optionally an additive. In this case, the type and amount of the polyethylene, nucleating agent, lubricant and additive are as described above.

The polyethylene may be directly manufactured to satisfy the above physical property requirements using a

conventional polyethylene preparation method, or may be commercially available polyethylene satisfying the above physical property requirements.

For example, the polyethylene satisfying the above physical property requirements may be prepared by polymerizing ethylene monomers in the presence of a catalyst including a first transition metal compound of the following Chemical Formula 2 and a second transition metal compound of the following Chemical Formula 3 while introducing hydrogen in an amount of 150 to 300 ppm based on the total weight of the ethylene monomers. In this case, a preparation method of the polyethylene resin composition according to the present disclosure may further include a step of preparing the polyethylene by the above-described method before mixing the polyethylene, the nucleating agent and the lubricant:

[Chemical Formula 2] $(Cp^1R^a)_m(Cp^2R^b)M^1Z^1_{3-m}$

in Chemical Formula 2,

$M^1$ is a Group 4 transition metal;
$Cp^1$ and $Cp^2$ are the same as or different from each other, and are each independently any one selected from the group consisting of cyclopentadienyl, indenyl, 4,5,6,7-tetrahydro-1-indenyl, and fluorenyl radicals, wherein they are unsubstituted or substituted with a $C_{1-20}$ hydrocarbon group;
$R^a$ and $R^b$ are the same as or different from each other, and are each independently hydrogen, $C_{1-20}$ alkyl, $C_{2-20}$ alkenyl, $C_{2-20}$ alkynyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, or $C_{6-20}$ aryloxy;
$Z^1$ is a halogen atom, $C_{1-20}$ alkyl, $C_{2-20}$ alkenyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, $C_{7-40}$ arylalkoxy, or a substituted or unsubstituted amino group; and
m is 1 or 0;

[Chemical Formula 3] $(Cp^3R^c)_nB^1(Cp^4R^d)M^2Z^2_{3-n}$

in Chemical Formula 3,

$M^2$ is a Group 4 transition metal;
$Cp^3$ and $Cp^4$ are the same as or different from each other, and are each independently any one selected from the group consisting of cyclopentadienyl, indenyl, 4,5,6,7-tetrahydro-1-indenyl, and fluorenyl radicals, wherein they are unsubstituted or substituted with a $C_{1-20}$ hydrocarbon group;
$R^c$ and $R^d$ are the same as or different from each other, and are each independently hydrogen, $C_{1-20}$ alkyl, $C_{2-20}$ alkenyl, $C_{2-20}$ alkynyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, or $C_{6-20}$ aryloxy;
$Z^2$ is a halogen atom, $C_{1-20}$ alkyl, $C_{2-20}$ alkenyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, $C_{7-40}$ arylalkoxy, or a substituted or unsubstituted amino group;
$B^1$ is one or a combination of carbon, germanium, silicon, phosphorus or nitrogen atom-containing radicals that cross-link the $Cp^3R^c$ ring and the $Cp^4R^d$ ring, or cross-link the $Cp^4R^d$ ring to $M^2$; and
n is 1 or 0.

Unless otherwise specified herein, following terms may be defined as follows.

The halogen may be fluorine (F), chlorine (Cl), bromine (Br) or iodine (I).

The $C_{1-20}$ alkyl may be linear, branched or cyclic alkyl. Specifically, the $C_{1-20}$ alkyl may be $C_{1-15}$ linear alkyl; $C_{1-10}$ linear alkyl; $C_{1-5}$ linear alkyl; $C_{3-20}$ branched or cyclic alkyl; $C_{3-15}$ branched or cyclic alkyl; or $C_{3-10}$ branched or cyclic alkyl. More specifically, the $C_{1-20}$ alkyl may be methyl, ethyl, n-propyl, iso-propyl, n-butyl, iso-butyl, tert-butyl, n-pentyl, iso-pentyl, neo-pentyl, cyclohexyl or the like.

The $C_{2-20}$ alkenyl may be linear, branched, or cyclic alkenyl. Specifically, the $C_{2-30}$ alkenyl may be $C_{2-20}$ linear alkenyl, $C_{2-10}$ linear alkenyl, $C_{2-5}$ linear alkenyl, $C_{3-20}$ branched alkenyl, $C_{3-15}$ branched alkenyl, $C_{3-10}$ branched alkenyl, $C_{5-20}$ cyclic alkenyl, or $C_{5-10}$ cyclic alkenyl. More specifically, the $C_{2-20}$ alkenyl may be ethenyl, propenyl, butenyl, pentenyl, cyclohexenyl, or the like.

The $C_{6-20}$ aryl may be a monocyclic, bicyclic or tricyclic aromatic hydrocarbon. Specifically, the $C_{6-20}$ aryl may be phenyl, naphthyl, anthracenyl, or the like.

The $C_{7-40}$ alkylaryl may be a substituent in which at least one hydrogen of the aryl is substituted with alkyl. Specifically, the $C_{7-40}$ alkylaryl may be methylphenyl, ethylphenyl, n-propylphenyl, iso-propylphenyl, n-butylphenyl, iso-butylphenyl, tert-butylphenyl, cyclohexylphenyl, or the like.

The $C_{7-40}$ arylalkyl may be a substituent in which at least one hydrogen of the alkyl is substituted with aryl. Specifically, the $C_{7-40}$ arylalkyl may be benzyl, phenylpropyl, phenylhexyl, or the like.

The $C_{1-20}$ alkoxy may be a methoxy group, an ethoxy group, an isopropoxy group, an n-butoxy group, a tert-butoxy group, a cyclohexyloxy group, or the like, but the present disclosure is not limited thereto.

The $C_{2-20}$ alkoxyalkyl is a functional group in which at least one hydrogen of the alkyl is substituted with alkoxy, and specifically, it may be alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, and tert-butoxyhexyl, but the present disclosure is not limited thereto.

The $C_{6-20}$ aryloxy may be phenoxy, biphenoxy, naphthoxy, or the like, but the present disclosure is not limited thereto.

The $C_{7-20}$ aryloxyalkyl is a functional group in which at least one hydrogen of the alkyl is substituted with aryloxy, and specifically, it may be phenoxymethyl, phenoxyethyl, phenoxyhexyl, or the like, but the present disclosure is not limited thereto.

The above-mentioned substituents may be optionally substituted with one or more substituents selected from the group consisting of a hydroxyl group; halogen; alkyl or alkenyl, aryl, alkoxy; alkyl or alkenyl, aryl, alkoxy containing at least one heteroatom of Group 14 to 16 heteroatoms; silyl; alkylsilyl or alkoxysilyl; a phosphine group; a phosphide group; a sulfonate group; and a sulfone group.

In addition, the Group 4 transition metal may be, but is not limited to, titanium, zirconium, or hafnium.

The first transition metal compound has excellent catalytic activity and is advantageous for the preparation of high-density polyethylene due to high comonomer incorporation. In addition, process stability is improved to prevent a fouling problem occurring during polymerization of polyethylene in the prior art, and mechanical properties of polyethylene can be improved when used together with a second transition metal compound to be described later.

More specifically, in Chemical Formula 2, $M^1$ may be zirconium (Zr) or hafnium (Hf), and more specifically, Zr.

In addition, in Chemical Formula 2, $Cp^1$ and $Cp^2$ may each independently be cyclopentadienyl unsubstituted or substituted with one or more $C_{1-20}$ alkyl.

In addition, $R^a$ and $R^b$ may each independently be hydrogen, $C_{1-6}$ linear or branched alkyl, $C_{1-6}$ alkyl substituted with $C_{1-6}$ alkoxy, $C_{1-6}$ alkyl substituted with $C_{6-12}$ aryl, or $C_{6-12}$ aryl. For example, $R^a$ and $R^b$ may each independently be hydrogen, methyl (Me), ethyl (Et), n-propyl (n-Pr), iso-propyl (i-Pr), n-butyl (n-Bu), tert-butyl (t-Bu), n-pentyl (n-Pt), n-hexyl (n-Hex), tert-butoxy (t-Bu-O) hexyl, phenylhexyl, or phenyl (Ph).

Among them, $Cp^1$ and $Cp^2$ may each be cyclopentadienyl, and $R^a$ and $R^b$ may each independently be $C_{1-6}$ alkyl substituted with $C_{1-6}$ alkoxy.

In Chemical Formula 2, each $Z^1$ may be halogen, and more specifically, chloro.

In Chemical Formula 2, m is 1 or 0.

For example, when each of $Cp^1$ and $Cp^2$ in Chemical Formula 2 is cyclopentadienyl, the first transition metal compound may be one of the compounds represented by the following structural formulae. However, this is only an example, and the first transition metal compound of the present disclosure is not limited thereto:

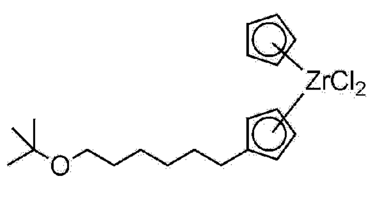
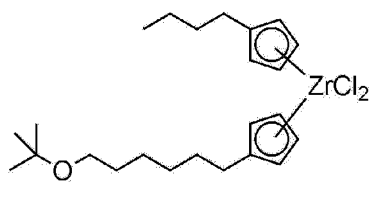
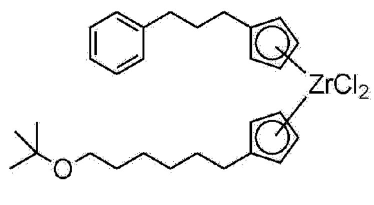
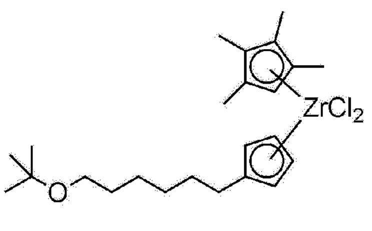
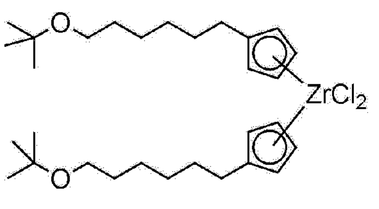
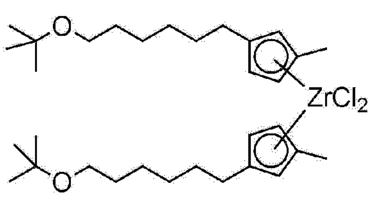
.

The first transition metal compound represented by the above structural formulae may be synthesized by applying known reactions, and a more detailed synthesis method may be understood with reference to Examples.

In addition, in regards to the second transition metal compound, the compound represented by Chemical Formula 3 is also advantageous for the preparation of high-density polyethylene, and when used together with the first transition metal compound, mechanical properties of the polyethylene can be improved.

More specifically, in Chemical Formula 3, $M^2$ may be Zr or Hf, and more specifically, Zr.

In Chemical Formula 3, $Cp^3$ and $Cp^4$ may each be cyclopentadienyl, indenyl, or fluorenyl, wherein they may

be unsubstituted or substituted with one or more of $C_{1-20}$ alkyl, $C_{2-20}$ alkenyl, $C_{6-20}$ aryl, or $C_{7-20}$ arylalkyl. More specifically, $Cp^3$ and $Cp^4$ may each independently be unsubstituted or substituted with one or more of methyl, ethyl, n-butyl, 1-butenyl, phenyl, or benzyl.

In addition, $R^c$ and $R^d$ may each independently be hydrogen, $C_{1-6}$ linear or branched alkyl, $C_{1-6}$ alkyl substituted with $C_{1-6}$ alkoxy, $C_{1-6}$ alkyl substituted with $C_{6-12}$ aryl, or $C_{6-12}$ aryl. For example, $R^c$ and $R^d$ may each independently be hydrogen, methyl (Me), ethyl (Et), n-propyl (n-Pr), iso-propyl (i-Pr), n-butyl (n-Bu), tert-butyl (t-Bu), n-pentyl (n-Pt), n-hexyl (n-Hex), tert-butoxy (t-Bu-O) hexyl, phenylhexyl, or phenyl (Ph).

Among them, $Cp^3$ and $Cp^4$ may each be unsubstituted fluorenyl, and $R^c$ and $R^d$ may each independently be hydrogen.

In Chemical Formula 3, $B^1$ is

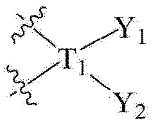

or

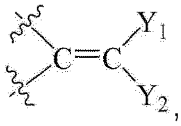

wherein $T_1$ is C or Si, and $Y_1$ and $Y_2$ are the same as or different from each other, and are each independently $C_{1-20}$ alkyl, $C_{2-20}$ alkenyl, $C_{2-20}$ alkynyl, $C_{6-20}$ aryl, $C_{7-40}$ arylalkyl, $C_{7-40}$ alkylaryl, $C_{1-20}$ alkoxy, $C_{2-20}$ alkoxyalkyl, $C_{6-20}$ aryloxy, $C_{7-20}$ aryloxyalkyl or silyl, or combined with each other to form a $C_{3-20}$ or $C_{3-12}$ aliphatic ring. More specifically, $B^1$ is

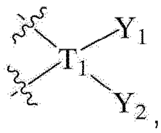

wherein $T_1$ is Si, and $Y_1$ and $Y_2$ are the same as or different from each other, and are each independently $C_{1-12}$ alkyl, $C_{6-12}$ aryl, $C_{2-12}$ alkoxy or $C_{2-12}$ alkoxyalkyl, or combined with each other to form a cyclohexyl group. More specifically, $B^1$ is

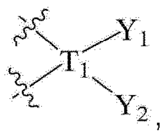

wherein $T_1$ is Si, $Y_1$ is $C_{1-10}$ alkyl such as a methyl group, an ethyl group, an n-propyl group and an n-butyl group, and $Y_2$ is $C_{2-10}$ alkoxyalkyl such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, or a tert-butoxyhexyl group.

In Chemical Formula 3, each $Z^2$ may be halogen, and more specifically, chloro.

For example, the second transition metal compound may be one of the compounds represented by the following structural formulae. However, this is only an example, and the second transition metal compound of the present disclosure is not limited thereto:

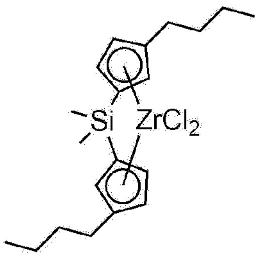
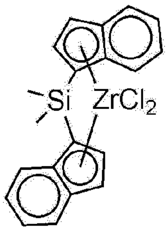
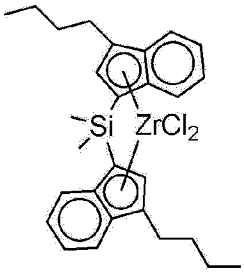
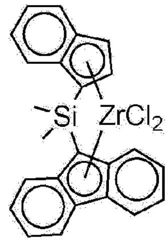

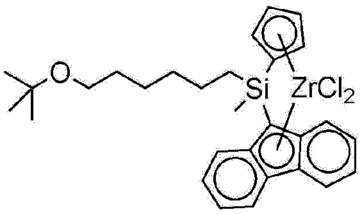
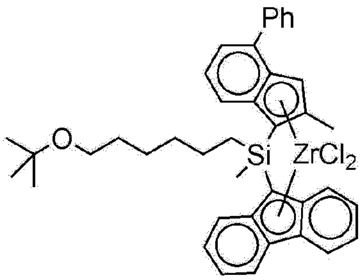
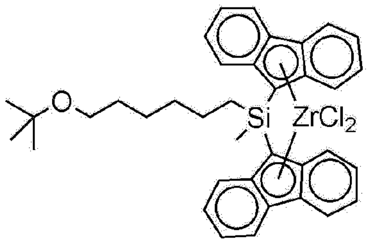

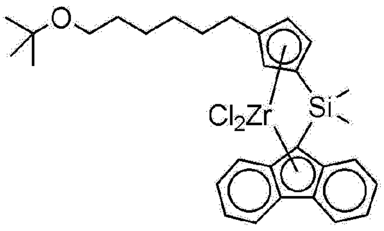
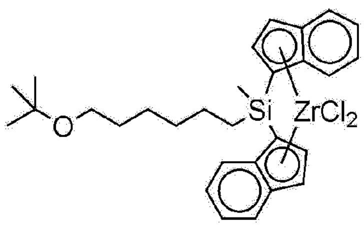
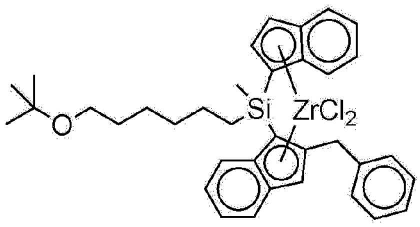

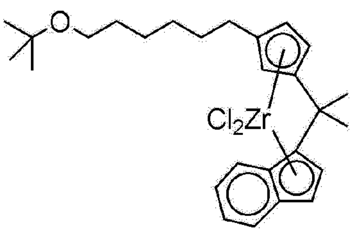
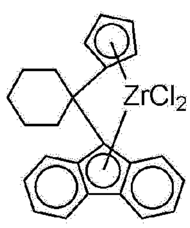
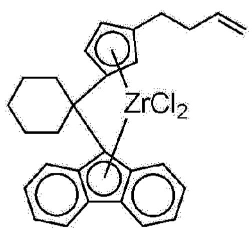
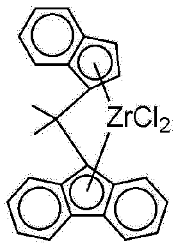
.

The compound represented by the above structural formulae may be synthesized by applying known reactions, and a more detailed synthesis method may be understood with reference to Examples.

In the present disclosure, each of the first and second transition metal compounds may be a meso isomer, a racemic isomer, or a mixture thereof.

In the present disclosure, "racemic form", "racemate" or "racemic isomer" refers to a form in which the same substituents on two cyclopentadienyl moieties are on opposite sides with respect to a plane containing a transition metal represented by $M^1$ or $M^2$ in Chemical Formula 2 or 3 such as zirconium (Zr) or hafnium (Hf), and a center of the cyclopentadienyl moieties.

In addition, "meso form" or "meso isomer" refers to a stereoisomer of the above-mentioned racemic isomer, wherein the same substituents on two cyclopentadienyl moieties are on the same side with respect to a plane containing a transition metal represented by $M^1$ or $M^2$ in Chemical Formula 2 or 3 such as zirconium (Zr) or hafnium (Hf), and a center of the cyclopentadienyl moieties.

The second transition metal compound may be used in a molar ratio of 0.5 to 1.4 based on 1 mole of the first transition metal compound. When used in the above molar ratio, excellent supporting performance and catalytic activity are exhibited, and the above-described physical properties of polyethylene can be achieved.

When the content of the second transition metal compound is too high because the mixing molar ratio of the second transition metal compound to the first transition metal compound exceeds 1.4, only the second transition metal compound acts predominantly, making it difficult to achieve the above-described physical properties of polyethylene. In addition, when the mixing molar ratio of the second transition metal compound to the first transition metal compound is too low, less than 0.5, only the first transition metal compound acts predominantly, making it difficult to reproduce the

desired molecular structure of polymer. More specifically, the second transition metal compound may be mixed in a molar ratio of 0.5 or more, or 1 or more and 1.4 or less, or 1.2 or less based on 1 mole of the first transition metal compound.

Meanwhile, the first and second transition metal compounds are used in a state supported on a silica support.

When used as a supported catalyst, the polymer to be prepared has excellent particle shape and bulk density, and the catalyst can be suitably used in the conventional slurry polymerization, bulk polymerization, or gas phase polymerization process. Among the above-mentioned supports, the silica support has little catalyst released from the surface of the support in the polymerization process of ethylene, because it is supported by chemically bonding the functional groups of the transition metal compound. As a result, when polyethylene is prepared by slurry polymerization or gas phase polymerization, a fouling phenomenon, sticking to the wall surface of the reactor or with each other, may be minimized.

The silica support may have an average particle diameter (D50) of 20 to 40 $\mu$m. In the case of having the above-mentioned particle diameter, the transition metal compound can be supported with better efficiency, thereby increasing catalytic activity. More specifically, it may be 20 $\mu$m or more, or 25 $\mu$m or more, and 40 $\mu$m or less, or 30 $\mu$m or less.

In the present disclosure, the average particle diameter (D50) of the silica support is a particle diameter at the 50% point of cumulative distribution of the number of particles according to particle size (diameter). The D50 may be measured using a laser diffraction method. Specifically, the silica support to be measured is dispersed in the dispersion medium such as deionized water and introduced into a commercially available particle size measuring device (e.g., Microtrac S3500). Then, a particle size distribution is obtained by measuring a difference in diffraction patterns according to particle size when the particles pass through the laser beam. In the measuring device, the average particle diameter is obtained by calculating a particle diameter at a point of reaching 50% of cumulative distribution of the number of particles according to particle diameter.

In addition, when supported on the silica support, each of the first and second transition metal compounds may be supported in an amount of 0.04 mmol or more, or 0.05 mmol or more, and 0.1 mmol or less, 0.085 mmol or less, or 0.06 mmol or less based on 1,000 g of silica. When supported within the above range, it may exhibit an appropriate supporting activity, which may be advantageous for maintaining the activity of the catalyst and economic feasibility.

In addition, the catalyst composition may further include a cocatalyst in terms of improving high activity and process stability.

The cocatalyst may include at least one selected from the group consisting of compounds represented by the following Chemical Formulae 4 to 6.

[Chemical Formula 4] $-[Al(R_{11})-O]m-$

-in Chemical Formula 4,

$R_{11}$ are the same as or different from each other, and each independently halogen; a $C_{1-20}$ hydrocarbyl group; or a $C_{1-20}$ halogen-substituted hydrocarbyl group; and
m is an integer of 2 or more;

[Chemical Formula 5] $J(R_{12})_3$

in Chemical Formula 5,

$R_{12}$ are the same as or different from each other, and each independently halogen; a $C_{1-20}$ hydrocarbyl group; or a $C_{1-20}$ halogen-substituted hydrocarbyl group; and
J is aluminum or boron;

[Chemical Formula 6] $[E-H]^+[QD_4]^-$ or $[E]^+[QD_4]^-$

in Chemical Formula 6,

E is a neutral or cationic Lewis base;
H is a hydrogen atom;
Q is a Group 13 element; and
D are the same as or different from each other, and each independently $C_{6-20}$ aryl or $C_{1-20}$alkyl in which one or more hydrogen atoms are unsubstituted or substituted with halogen, $C_{1-20}$ alkyl, alkoxy or phenoxy.

Examples of the compound represented by Chemical Formula 4 may include an alkylaluminoxane-based compound such as methylaluminoxane, ethylaluminoxane, isobutylaluminoxane, butylaluminoxane, and the like, and any one or a mixture thereof may be used.

Examples of the compound represented by Chemical Formula 5 may include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and any one or a mixture thereof may be used.

Examples of the compound represented by Chemical Formula 6 may include triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenyl boron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapenta tetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, triphenylcarbonium tetrapentafluorophenylboron, and the like, and any one or a mixture thereof may be used.

Among the compounds described above, the cocatalyst may be, more specifically, an alkylaluminoxane-based cocatalyst such as methylaluminoxane.

The alkylaluminoxane-based cocatalyst stabilizes the first and second transition metal compounds and acts as a Lewis acid, so that further enhances catalytic activity by including a metal element capable of forming a bond with a functional group introduced into a bridge group of the first and second transition metal compounds through a Lewis acid-base interaction.

In addition, the amount of the cocatalyst used may be appropriately adjusted depending on desired properties or effects of the catalyst and the polyethylene resin composition. For example, when silica is used as the support, the cocatalyst may be supported in an amount of 100 g or more, 500 g or more, or 650 g or more, and 1,000 g or less, 800 g or less, or 700 g or less based on a weight of the support, for example, 1,000g of silica.

The catalyst composition having the above configuration may be prepared by a method including the steps of: supporting a cocatalyst compound on a support; and supporting the first and second transition metal compounds on the support. Herein, the supporting order of the cocatalyst and the first and second transition metal compounds and the supporting order of the first transition metal compound and the second transition metal compound may be changed, if necessary. The first and second transition metal compounds may be simultaneously supported. In consideration of the effect of the supported catalyst having a structure determined by the supporting order, sequentially supporting the second and first transition metal compounds after supporting the cocatalyst on the support can achieve higher catalytic activity and better process stability in the preparation of polyethylene.

Meanwhile, the polymerization reaction for the preparation of polyethylene is performed while introducing hydrogen gas.

The hydrogen gas activates the inert site of the metallocene catalyst and causes a chain transfer reaction, thereby controlling the molecular weight. The first and second transition metal compounds used in the present disclosure have excellent hydrogen reactivity, and therefore, a polyethylene having a desired level of molecular weight and melt index can be effectively obtained by controlling the amount of hydrogen gas used during the polymerization.

The hydrogen gas may be introduced in an amount of 150 ppm or more, or 190 ppm or more, and 300 ppm or less, 250 ppm or less, or 200 ppm or less based on the weight of the ethylene monomer.

In addition, the polymerization reaction of the ethylene monomer may be carried out in a continuous polymerization process, and various polymerization processes known as polymerization of olefin monomers such as a solution polymerization process, a slurry polymerization process, a suspension polymerization process, or an emulsion polymerization process can be used. In particular, in order to achieve the above-described physical properties of the polyethylene to be prepared and to enable commercial production, a continuous bulk slurry polymerization process in which a catalyst, a monomer and hydrogen gas are continuously introduced can be used.

In addition, the polymerization reaction may be carried out at a temperature of 40 °C or higher, 60 °C or higher, 70 °C or higher, or 80 °C or higher, and 110 °C or lower, 100 °C or lower, 90 °C or lower, or 85 °C or lower. In addition, the polymerization reaction may be carried out under a pressure of $5 kg/cm^2$ or higher, $7 kg/cm^2$ or higher, or $7.5 kg/cm^2$

or higher, and 20kg/$cm^2$ or lower, 10kg/$cm^2$ or lower, 9kg/$cm^2$ or lower, 8.5kg/$cm^2$ or lower, or 8kg/$cm^2$ or lower. As polymerization proceeds under such a temperature and pressure, a desired polyethylene can be prepared in high yield.

In addition, trialkylaluminum such as triethylaluminum may be optionally added in an amount of 0.01 wt% or more, 0.05 wt% or more, or 0.1 wt% or more, and 1 wt% or less, or 0.5 wt% or less based on the total weight of the ethylene monomer during the polymerization reaction. When moisture or impurities are present in the polymerization reactor, a part of the catalyst decomposes. Since the trialkylaluminum acts as a scavenger which preliminarily captures moisture or impurities present in the reactor or moisture contained in the monomer, activity of the catalyst used in the preparation may be maximized, and as a result, a polyethylene satisfying the above physical property requirements can be efficiently prepared.

As the polyethylene prepared by the above-described preparation method satisfies the conditions of high density, MI in the optimum range, and furthermore, MFRR, it is possible to simultaneously improve the balance between oxygen and moisture barrier properties and processability when preparing the polyethylene resin composition.

The polyethylene resin composition according to the present disclosure can improve transparency and moisture barrier properties while maintaining excellent film properties. Accordingly, it is useful for the preparation of films requiring transparency and moisture barrier properties, particularly films for food packaging.

Specifically, the polyethylene resin composition according to the present disclosure including the above-described polyethylene, a nucleating agent, and a lubricant has Tc-onset (onset transition temperature) measured by differential scanning calorimetry of higher than 120 °C.

Tc-onset refers to the temperature at which the molten polyethylene undergoes a phase change to a solid state and crystallization occurs when cooled. The higher the Tc-onset, the faster it cools and crystallization proceeds. Therefore, the crystallinity may be increased, and thus WVTR may be increased by densely growing crystals. In addition, since the ratio of amorphous region is relatively reduced, transparency of the film may be improved. The polyethylene resin composition according to the present disclosure exhibits higher Tc-onset compared to the conventional polyethylene resin composition for film, and thus can exhibit superior transparency and improved moisture barrier properties. More specifically, the Tc-onset of the polyethylene resin composition is 121 °C or higher, 122 °C or higher, 123 °C or higher, or 124 °C or higher, and 130 °C or lower, or 125 °C or lower.

In the present disclosure, the Tc-onset of the polyethylene resin composition can be measured according to the method disclosed in the literature (Influence of the Origin of Polyamide 12 Powder on the Laser Sintering Process and Laser Sintered Parts, Appl. Sci. 2017, 7(5), 462; https://doi.org/10.3390/app7050462) using a differential scanning calorimeter (DSC). Specifically, after drying the polyethylene resin composition at a temperature of 140 °C under a pressure of 10 mmHg for 12 hours, 5 mg thereof is sampled in an aluminum pan for liquids. Then, the cycle of increasing and lowering the temperature is repeated twice using a differential scanning calorimeter (DSC, TA2000) manufactured by TA Instruments, in which the temperature is increased from 25 °C to 200 °C at 10 °C/min, maintained at 200 °C for 5 minutes, and then lowered to -50 °C at 10 °C/min. In the first run, the beginning of an endothermic peak in the temperature increase curve appearing while the temperature is increased is measured as an endothermic onset temperature, and the beginning of an exothermic peak in the cooling curve appearing while the temperature is decreased is measured as an exothermic onset temperature. In addition, after the endothermic reaction of the temperature increase process is completed in the second run, the beginning of an exothermic peak in the cooling curve appearing in the cooling process is measured as the temperature at which crystallization begins, that is, Tc-onset. Specific measurement methods and conditions are as described in Experimental Examples below.

In addition, the polyethylene resin composition exhibits a high crystallinity compared to the conventional polyethylene resin composition due to the high Tc-onset exceeding 120 °C.

Specifically, the polyethylene resin composition exhibits a crystallinity of 68 to 80%. More specifically, it exhibits a crystallinity of 68% or more, 69% or more, 70% or more, 72% or more, 73% or more, or 73.7% or more, and 80% or less, or 75% or less. As it has such a high crystallinity, a dense crystal structure is formed when manufacturing a film using the resin composition. As a result, under the conditions satisfying the above-described metal cation content, transparency and moisture barrier properties can be further improved.

The crystallinity of the polyethylene resin composition is obtained by differential scanning calorimetry. Specifically, after drying the polyethylene resin composition at a temperature of 140 °C under a pressure of 10 mmHg for 12 hours, 5 mg thereof is sampled in an aluminum pan for liquids. Then, the cycle of increasing and lowering the temperature is repeated twice using a differential scanning calorimeter (DSC, TA2000) manufactured by TA Instruments, in which the temperature is increased from 25 °C to 200 °C at 10 °C/min, maintained at 200 °C for 5 minutes, and then lowered to -50 °C at 10 °C/min. A new baseline is set so that the curve is smoothly connected at the temperature before and after melting from the beginning to the end of the endothermic peak in the temperature increase curve appearing in the second run. Then, a melting peak, which is the highest endothermic peak, is obtained, and an area of the melting peak is integrated to obtain the heat of fusion ($\Delta$Hf) of the polyethylene resin composition. The crystallinity of each resin composition is obtained with the heat of fusion of the polyethylene resin composition having 100% crystallinity according to Equation 1 below.

[Equation 1]

$$\text{Crystallinity (\%)} = (\triangle Hf / \triangle H_0) \times 100$$

Herein, $\triangle Hf$ is the heat of fusion (J/g) of the polyethylene resin composition. $\triangle H_0$ is the heat of fusion (J/g) of the polyethylene resin composition having 100% crystallinity, and the heat of fusion of 100% crystalline polyethylene, 293.4 J/g (Reference: "Using DSC to Measure the Degree of Crystallinity in Polyethylene Waste Bags", manufactured by ebatco), is used.

The method and conditions for measuring the crystallinity of the polyethylene resin composition are as described in Experimental Examples below.

In addition, according to the present disclosure, there is provided a polyethylene resin film prepared using the above-described polyethylene resin composition.

As the polyethylene resin film includes the polyethylene resin composition, it exhibits a high crystallinity, and as a result, it can exhibit significantly improved transparency and moisture barrier properties without deterioration in film properties and color change such as pinking.

Specifically, the polyethylene resin film according to the present disclosure satisfies the following conditions (b1) and (b2).

(b1) internal haze measured according to ASTM D1003 with a film thickness of 25 $\mu$m: 6.5% or less, and

(b2) WVTR measured according to ASTM F 1249-90 with a film thickness of 25 $\mu$m: 5500 mg/m$^2$·day or less.

The polyethylene resin film has an internal haze of 6.5% or less, more specifically 6.2% or less, 6% or less, or 5.7% or less when measured according to ASTM D1003 with a film thickness of 25 $\mu$m, which is significantly lower than that of the conventional polyethylene film. The lower internal haze can be evaluated as the better. However, considering the limitations of the manufacturing process, the internal haze of the polyethylene resin film according to the present disclosure may be 1% or more, 3% or more, or 5% or more.

The method and conditions for measuring the internal haze of the polyethylene resin film are as described in Experimental Examples below.

In addition, the polyethylene resin film has WVTR of 5500 mg/m$^2$·day or less, specifically 5000 mg/m$^2$·day or less, when measured according to ASTM F 1249-90 with a film thickness of 25 $\mu$m.

WVTR refers to the amount of water vapor (g) transmitted per 50 cm$^2$ of film for 1 day with a film thickness of 25 $\mu$m. The lower the WVTR, the better the moisture barrier properties. However, considering the limitations of the manufacturing process, WVTR may be 1000 mg/m$^2$·day or more, 3000 mg/m$^2$·day or more, or 4000 mg/m$^2$·day or more.

The WVTR of the polyethylene resin film can be measured using Mocon AquaTran from Modern Controls Inc. according to ASTM F 1249-90, and specific measurement methods and conditions are described in Experimental Examples below.

Hereinafter, preferred examples are provided to aid in understanding the present invention. However, these examples are for illustrative purposes only, and the invention is not intended to be limited by these examples.

<Preparation of Catalyst>

**Synthesis Example 1**

First, silica (SP 952 manufactured by Grace Davison, average particle diameter (D50): 28 $\mu$m) was dehydrated and dried under vacuum at a temperature of 250 °C for 12 hours to prepare a support.

3.0 kg of a toluene solution was added to a 20 L high-pressure stainless steel (sus) reactor, and 1000 g of the previously prepared silica was added thereto. Then, the reactor temperature was raised to 40 °C while stirring, thereby sufficiently dispersing the silica for 60 minutes. Thereafter, 6.5 kg of a 10 wt% methylaluminoxane (MAO)/toluene solution was added, and stirred at 200 rpm for 12 hours. After raising the temperature of the reactor to 60 °C, 0.059 mmol of the first transition metal compound (1a) having the following structure dissolved in toluene was added in a solution state, and reacted for 2 hours while stirring at 50 °C at 200 rpm.

After completion of the reaction, 0.059 mmol of the second transition metal compound (2a) having the following structure dissolved in toluene was added thereto, and reacted for 2 hours while stirring at 50 °C at 200 rpm.

When the reaction was completed, the stirring was stopped and the reaction solution was subjected to decantation after settling for 30 minutes. After washing with a sufficient amount of toluene, 3.0 kg of toluene was added again.

Then, stirring was stopped after 30 minutes, and washing with a sufficient amount of toluene was performed to remove compounds not participating in the reaction. Thereafter, 3.0 kg of hexane was added to the reactor and stirred, and the hexane slurry was transferred to a filter for filtration.

A hybrid supported catalyst was obtained by primary drying at room temperature under reduced pressure for 5 hours, and secondary drying at 50 °C under reduced pressure for 4 hours. The molar ratio of the first transition metal compound (1a): the second transition metal compound (2a) in the hybrid supported catalyst was 1:1.

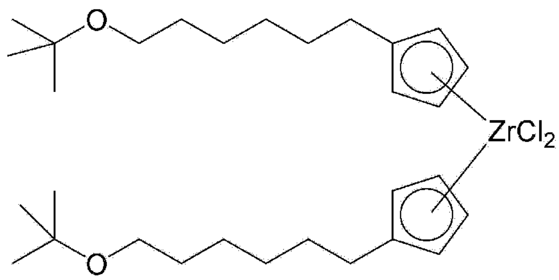

(1a)

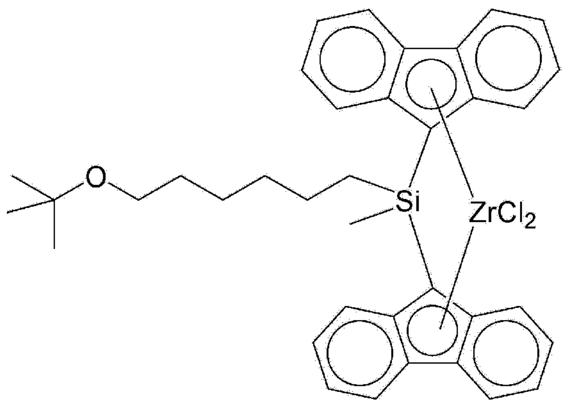

(2a)

**Synthesis Example 2**

A catalyst was prepared in the same manner as in Synthesis Example 1, except that the molar ratio of the first transition metal compound (1a): the second transition metal compound (2a) in the hybrid supported catalyst was changed to 1:1.4.

<Preparation of polyethylene>

**Preparation Example 1**

In the presence of the hybrid supported catalyst prepared in Synthesis Example 1, bulk-slurry polymerization of ethylene was performed using a continuous stirred tank reactor (CSTR).

Specifically, while maintaining the input of ethylene at 10 kg/hr to the reactor, hydrogen gas was introduced using a pump, and the hybrid supported catalyst prepared in Synthesis Example 1 was dispersed in iso-butane at 4 wt % and added in an amount of 2 ml/min. At this time, the hydrogen gas was added in an amount of 200 ppm based on the total weight of the ethylene monomers, the temperature of the reactor was 85 °C and polyethylene was prepared while maintaining a production rate of 10 kg per hour.

**Preparation Examples 2 to 4 and Comparative Preparation Examples 1 to 5**

Polyethylene was prepared in the same manner as in Preparation Example 1, except that the polymerization reaction was performed on the ethylene monomer under the conditions shown in Table 1 below.

**Experimental Example 1**

The density, melt index (MI), melt flow rate (MFRR) and molecular weight distribution (PDI) were measured for the polyethylene prepared in Preparation Examples and Comparative Preparation Examples in the following manner, and the results are shown in Table 1 below.

(1) Density ($g/cm^3$)

The density of the polyethylene was measured at 23 °C according to the ISO 1183-2 method.

(2) Melt index ($MI_{2.16}$, g/10min)

It was measured according to the ISO 1133 method at 190 °C under a load of 2.16 kg, and expressed as the weight (g) of the polyethylene melted for 10 minutes.

(3) Melt flow rate (MFRR, $MI_5/MI_{2.16}$)

$MI_{2.16}$ (190 °C, 2.16 kg load) and $MI_5$ (190 °C, 5 kg load) of the polyethylene were measured according to the ISO 1133 method, respectively, and MFRR (Melt Flow Rate Ratio) was calculated by dividing $MI_5$ by $MI_{2.16}$.

(4) Molecular weight distribution (PDI)

The molecular weight distribution (Mw/Mn, polydispersity index) of the polyethylene prepared in Preparation Examples and Comparative Preparation Examples was calculated by dividing the weight average molecular weight (Mw) by the number average molecular weight (Mn) after measuring the weight average molecular weight (Mw) and the number average molecular weight (Mn) using gel permeation chromatography (GPC).

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. 10 mg of each polyethylene sample prepared in Preparation Example or Comparative Preparation Example was pretreated by dissolving in 1,2,4-trichlorobenzene containing 0.0125% of BHT at 160 °C for 10 hours using PL-SP260 (manufactured by Agilent Technology), a sample pretreatment system, and the sample with a concentration of 10 mg/10 mL was supplied in an amount of 200 μL. Mw and Mn were obtained using a calibration curve formed using a polystyrene standard. 9 kinds of the polystyrene standard were used with the molecular weight of 2,000g/mol, 10,000g/mol, 30,000g/mol, 70,000g/mol, 200,000g/mol, 700,000 g/mol, 2,000,000 g/mol, 4,000,000 g/mol, and 10,000,000 g/mol.

[Table 1]

| | Polymerization Conditions | | | | | | | Polyethylene Properties | | | |
|---|---|---|---|---|---|---|---|---|---|---|---|
| | Cataly st type (Input g/h) | Ethyle ne input (kg/h) | Hydro gen input (Base d on total ethyle ne weight , ppm) | polym erizati on temp. (°C | Press ure (kg/c $m^2$) | TEAL input (cc/h) | 1-buten e input (cc/h) | Densit y (g/ $cm^3$) | $MI_{2.16}$ (g/10 min) | MFRR ($MI_5$/ $MI_{2.16}$) | PDI |
| Prep. Ex. 1 | Syn. Ex. 1 (300) | 10 | 200 | 85 | 8.0 | 150 | 0 | 0.963 | 0.85 | 3.79 | 9.5 |
| Prep. Ex. 2 | Syn. Ex. 2 (300) | 10 | 300 | 80 | 7.5 | 150 | 0 | 0.964 | 0.85 | 3.82 | 10.2 |
| Prep. Ex. 3 | Syn. Ex. 1 (300) | 10 | 150 | 85 | 8.0 | 150 | 0 | 0.961 | 0.73 | 3.54 | 9.0 |
| Prep. Ex. 4 | Syn. Ex. 1 (300) | 10 | 190 | 85 | 8.0 | 150 | 0 | 0.962 | 0.82 | 3.82 | 9.4 |
| Comp. Prep. Ex. 1 | Syn. Ex. 1 (300) | 10 | 190 | 85 | 8.0 | 150 | 40 | 0.954 | 0.82 | 3.79 | 9.9 |
| Comp. Prep. Ex. 2 | Syn. Ex. 1 (300) | 10 | 190 | 85 | 8.0 | 150 | 45 | 0.952 | 0.87 | 3.92 | 10.1 |
| Comp. Prep. Ex. 3 | Syn. Ex. 2 (300) | 10 | 100 | 80 | 7.5 | 150 | 0 | 0.964 | 0.65 | 3.43 | 9.2 |
| Comp. Prep. Ex. 4 | Syn. Ex. 1 (300) | 10 | 400 | 85 | 8.3 | 150 | 0 | 0.966 | 1.42 | 4.58 | 13.2 |
| Comp. Prep. Ex. 5 | Syn. Ex. 1 (300) | 10 | 350 | 85 | 8.7 | 150 | 0 | 0.976 | 1.25 | 4.42 | 12.3 |

**<Preparation of polyethylene resin composition and film>**

**Example 1**

With respect to the polyethylene prepared in Preparation Example 1, 1,000 ppm of antioxidants (Irganox™ 1010 (manufactured by BASF) and Irgafos™ 168 (manufactured by BASF) in a 1:1 weight ratio) were mixed based on a total weight of the polyethylene, and then a nucleating agent and a lubricant were mixed in the amounts shown in Table 2 below to prepare a polyethylene resin composition.

The polyethylene resin composition prepared above was blow-molded at an extrusion temperature of 180 °C to a thickness of 25 $\mu$m using a single screw extruder (Yoojin Engineering Single Screw Extruder, Blown Film M/C, 50 $\Phi$, L/D=20). At this time, a die gap was set to 1.5 mm, and other film manufacturing conditions are as follows.

<Film manufacturing conditions>

Extrusion screw: 40 RPM
Blow-up ratio: 2.5
Processing temperature: 180 °C

**Examples 2 to 7**

A polyethylene resin composition was prepared in the same manner as in Example 1, except for mixing the nucleating agent and the lubricant under the conditions shown in Table 2 below.

**Comparative Examples 1 to 13**

A polyethylene resin composition was prepared in the same manner as in Example 1, except that additives were mixed under the conditions shown in Table 2 below.

[Table 2]

| | PE type | Nucleating agent | | Lubricant | | | |
|---|---|---|---|---|---|---|---|
| | | Ca-hexahydro phthalate | Zn-hexahydro phthalate | Ca Stearate | Zn stearate | Ca palmitate | Zn palmitate |
| Ex. 1 | Prep. Ex.1 | 400 | - | 400 | - | - | - |
| Ex. 2 | Prep. Ex.1 | - | 400 | - | 400 | - | - |
| Ex. 3 | Prep. Ex.1 | 400 | - | 400 | - | - | - |
| Ex. 4 | Prep. Ex.1 | - | 920 | - | 680 | - | - |
| Ex. 5 | Prep. Ex.1 | - | 720 | - | 480 | - | - |
| Ex. 6 | Prep. Ex.1 | - | 420 | - | - | - | 420 |
| Ex. 7 | Prep. Ex.1 | 420 | - | 210 | - | 210 | - |
| Comp. Ex.1 | Prep. Ex.1 | - | - | - | - | - | - |
| Comp. Ex.2 | Prep. Ex.1 | - | 400 | 400 | - | - | - |
| Comp. Ex.3 | Prep. Ex.1 | 400 | - | - | 400 | - | - |
| Comp. Ex.4 | Comp. Prep. Ex.1 | 400 | - | 400 | - | - | - |
| Comp. Ex.5 | Comp. Prep. Ex.2 | - | 400 | - | 400 | - | - |

(continued)

| | PE type | Nucleating agent | | Lubricant | | | |
|---|---|---|---|---|---|---|---|
| | | Ca-hexahydro phthalate | Zn-hexahydro phthalate | Ca Stearate | Zn stearate | Ca palmitate | Zn palmitate |
| Comp. Ex.6 | Comp. Prep. Ex.3 | 400 | - | 400 | - | - | - |
| Comp. Ex.7 | Comp. Prep. Ex.3 | - | 400 | - | 400 | - | - |
| Comp. Ex.8 | Comp. Prep. Ex.4 | 400 | - | 400 | - | - | - |
| Comp. Ex.9 | Comp. Prep. Ex.5 | 400 | - | 400 | - | - | - |
| Comp. Ex. 10 | Prep. Ex.1 | 100 | - | 100 | - | - | - |
| Comp. Ex. 11 | Prep. Ex.1 | 1500 | - | 1500 | - | - | |
| Comp. Ex. 12 | Prep. Ex.1 | 400 | - | - | 200 | - | 200 |
| Comp. Ex. 13 | Prep. Ex.1 | 400 | - | - | 200 | 200 | - |

**Experimental Example 2**

The content of metal cations, Tc-onset, crystallinity, internal haze and WVTR were measured for the polyethylene resin composition or polyethylene resin film prepared in Preparation Examples and Comparative Preparation Examples in the following manner, and the results are shown in Table 3 and FIG.1 below.

(1) Content of metal cations (based on the total weight of polyethylene, ppm)

About 3 g of a sample of the polyethylene resin composition prepared in Examples or Comparative Examples was aliquoted into a platinum crucible and weighed, and then the sample was slowly heated to 650 °C in an electric furnace and carbonized for decomposition of organic matter. 1 mL of 5% $HNO_3$ and 100 μL of 30% $H_2O_2$ were added to the resulting residue, heated at 70 °C for 120 minutes, and diluted with ultrapure water to make a total amount of 5 mL. The content of metal cations (ppm) was measured for the prepared diluted solution using ICP-OES (Optima 7300DV, manufactured by PerkinElmer Co.).

<Standard solution>

Mn standard solution for element measurement ($Mn^{2+}$ 1000mg/L)

<Analysis conditions>

RF power: 1,300 W,
Analysis pump flow rate: 1.5 mL/min,
Gas flows: plasma 14 L/min, auxiliary 0.5 L/min,
purge gas flow: nitrogen gas 5 L/min,
Delay Time: 60s,
Internal standard: Sc 10 ppm

(2) Tc-onset (°C)

Tc-onset was measured by the method disclosed in the literature (Influence of the Origin of Polyamide 12 Powder on the Laser Sintering Process and Laser Sintered Parts, Appl. Sci. 2017, 7(5), 462) using a differential scanning calorimeter.

Specifically, after drying the polyethylene resin composition prepared in one of Examples and Comparative Examples at a temperature of 140 °C under a pressure of 10 mmHg for 12 hours, 5 mg thereof was sampled in an aluminum pan for liquids. Then, the cycle of increasing and lowering the temperature was repeated twice using a differential scanning calorimeter (DSC, TA2000) manufactured by TA Instruments, in which the temperature was increased from 25 °C to 200 °C at 10 °C/min, maintained at 200 °C for 5 minutes, and then lowered to -50 °C at 10 °C/min. In the first run, the beginning of an endothermic peak in the temperature increase curve appearing while the temperature was increased was measured as an endothermic onset temperature, and the beginning of an exothermic peak in the cooling curve appearing while the temperature was decreased was measured as an exothermic onset temperature. In addition, after the endothermic reaction of the temperature increase process was completed in the second run, the beginning of an exothermic peak in the cooling curve appearing in the cooling process was measured as the temperature at which crystallization begins, that is, Tc-onset.

(3) Crystallinity (%)

The crystallinity was measured using a differential scanning calorimeter.

Specifically, after drying the polyethylene resin composition prepared in one of Examples and Comparative Examples at a temperature of 140 °C under a pressure of 10 mmHg for 12 hours, 5 mg thereof was sampled in an aluminum pan for liquids. Then, the cycle of increasing and lowering the temperature was repeated twice using a differential scanning calorimeter (DSC, TA2000) manufactured by TA Instruments, in which the temperature was increased from 25 °C to 200 °C at 10 °C/min, maintained at 200 °C for 5 minutes, and then lowered to -50 °C at 10 °C/min.

A new baseline was set so that the curve was smoothly connected at the temperature before and after melting from the beginning to the end of the endothermic peak in the temperature increase curve appearing in the second run. Then, a melting peak, which is the highest endothermic peak, was obtained, and an area of the melting peak was integrated to obtain the heat of fusion (ΔHf) of the polyethylene resin composition. The crystallinity of each resin composition was obtained with the heat of fusion of the polyethylene resin composition having 100% crystallinity according to Equation 1 below.

[Equation 1]

$$\text{Crystallinity (\%)} = (\triangle Hf / \triangle H_0) \times 100$$

Herein, $\triangle Hf$ is the heat of fusion (J/g) of the polyethylene resin composition. $\triangle H_0$ is the heat of fusion (J/g) of the polyethylene resin composition having 100% crystallinity, and the heat of fusion of 100% crystalline polyethylene, 293.4 J/g, was used.

In addition, FIG. 1 is a graph showing a DSC curve in the second run when analyzing the polyethylene resin composition of Example 6 using a differential scanning calorimeter (DSC).

As shown in FIG. 1, the polyethylene resin composition of Example 6 had a crystallization temperature (Tc) of 118.21 °C, a melting temperature (Tm) of 135.07 °C, and Tc-onest of 122.20 °C. In addition, the heat of fusion (ΔHf) at the highest point of the endothermic peak was 202.8 J/g, and the crystallinity calculated using the Equation 1 was 69.1%.

(4) Internal Haze

The internal haze of the polyethylene resin films prepared in Examples and Comparative Examples was measured according to ASTM D1003.

Specifically, each specimen of the polyethylene resin films prepared in Examples and Comparative Examples was prepared (thickness of 25 $\mu$m). Then, after sufficiently applying immersion oil (Cargille Labs.) to both surfaces of the specimen to minimize the effect of surface haze, the internal haze was measured using a hazemeter (HM-150, manufactured by Murakami Color Research Lab.) according to ASTM D1003.

(5) WVTR

WVTR refers to the amount of water vapor (g) transmitted per 50 $cm^2$ of film for 1 day with a film thickness of 25 $\mu$m.

Each specimen of the polyethylene resin films prepared in Examples and Comparative Examples was prepared (thickness of 25 $\mu$m), and WVTR was measured under the following conditions using Mocon AquaTran from Modern Controls Inc. according to ASTM F 1249-90.

<Measurement conditions>

Film thickness: 25 $\mu$m

Film area: 50 $cm^2$

Relative Humidity (RH): 100 %

Pressure: 1 bar

Temperature: 37.8 °C

(6) Color change of film (Pinking)

For the polyethylene resin films prepared in Examples and Comparative Examples, the occurrence of pinking was visually checked, and the color change of film was evaluated according to the following criteria:

<Evaluation criteria>

X: No pinking (no), excellent film color characteristics

O: Pinking occurs (yes), poor film color characteristics

[Table 3]

| | Content of metal cations (ppm) | Tc-onset (°C) | Crystallinity (%) | Internal haze (%) | Film WVTR (25$\mu$m) (mg/$m^2$·day) | Occurrence of pinking |
|---|---|---|---|---|---|---|
| Ex. 1 | 780 | 122 | 72.4 | 5.1 | 4669 | X |
| Ex. 2 | 760 | 122 | 70.3 | 5.7 | 4853 | X |
| Ex. 3 | 1180 | 123 | 73.4 | 5.3 | 4452 | X |
| Ex. 4 | 1560 | 124 | 73.7 | 5.2 | 4164 | X |
| Ex. 5 | 1175 | 123 | 73.2 | 5.6 | 4385 | X |
| Ex. 6 | 760 | 122 | 69.1 | 6.2 | 4957 | X |
| Ex. 7 | 765 | 121 | 69.0 | 6.0 | 4925 | X |
| Comp. Ex. 1 | 20 | 118 | 66.7 | 7.8 | 6128 | X |
| Comp. Ex. 2 | 775 | 119 | 68.4 | 6.5 | 5638 | X |
| Comp. Ex. 3 | 780 | 119 | 68.6 | 6.4 | 5514 | X |

(continued)

| | Content of metal cations (ppm) | Tc-onset (°C) | Crystallinity (%) | Internal haze (%) | Film WVTR (25$\mu$m) (mg/$m^2$·day) | Occurrence of pinking |
|---|---|---|---|---|---|---|
| Comp. Ex. 4 | 780 | 118 | 66.8 | 7.4 | 5964 | X |
| Comp. Ex. 5 | 770 | 119 | 65.3 | 7.6 | 5727 | X |
| Comp. Ex. 6 | 780 | 119 | 68.2 | 6.7 | 5535 | X |
| Comp. Ex. 7 | 760 | 117 | 67.5 | 6.9 | 5648 | X |
| Comp. Ex. 8 | 780 | 119 | 70.3 | 8.2 | 5397 | X |
| Comp. Ex. 9 | 770 | 120 | 78.7 | 9.5 | 5243 | X |
| Comp. Ex. 10 | 165 | 119 | 67.2 | 6.7 | 6018 | X |
| Comp. Ex. 11 | 3285 | 123 | 73.5 | 10.3 | 5442 | O |
| Comp. Ex. 12 | 765 | 119 | 67.6 | 7.0 | 5668 | X |
| Comp. Ex. 13 | 775 | 119 | 68.1 | 6.8 | 5595 | X |

As a result of the experiment, the polyethylene resin films of Examples 1 to 7 prepared by using the polyethylene resin composition according to the present disclosure exhibited excellent transparency and moisture barrier properties with high crystallinity, and there was no pinking phenomenon.

## Claims

1. A polyethylene resin composition comprising

    a polyethylene satisfying the following conditions (a1) and (a2);
    a nucleating agent; and
    a lubricant;
    wherein the nucleating agent and the lubricant contain a cation of a same metal,
    the metal is selected from the group consisting of Group 2 and Group 12 metals,
    the cation of the metal is comprised in an amount of 500 to 2,500 ppm based on a total weight of the polyethylene, and
    Tc-onset (onset transition temperature) is higher than 120 °C:

        (a1) density measured at 23 °C according to the ISO 1183-2 method: more than 0.960 g/$cm^3$ and 0.975 g/$cm^3$ or less, and
        (a2) melt index measured at 190 °C under a load of 2.16 kg according to the ISO 1133 method: 0.72 to 1.2 g/10min.

2. The polyethylene resin composition of Claim 1,
wherein the nucleating agent is a hexahydrophthalate-based compound containing a cation of a Group 2 or 12 metal.

3. The polyethylene resin composition of Claim 1,

wherein the lubricant is a fatty acid salt containing a cation of a Group 2 or 12 metal.

**4.** The polyethylene resin composition of Claim 1,
wherein the metal is Ca, Mg or Zn.

**5.** The polyethylene resin composition of Claim 1,
wherein the nucleating agent is calcium hexahydrophthalate, and the lubricant comprises at least one of calcium stearate and calcium palmitate; or the nucleating agent is zinc hexahydrophthalate, and the lubricant comprises at least one of zinc stearate and zinc palmitate.

**6.** The polyethylene resin composition of Claim 1,
wherein the nucleating agent is included in an amount of 100 to 1,000 ppm and the lubricant is included in an amount of 200 to 1,500 ppm based on a total weight of the polyethylene.

**7.** The polyethylene resin composition of Claim 1,
wherein the nucleating agent and the lubricant are included in a weight ratio of 3:1 to 1:1.

**8.** The polyethylene resin composition of Claim 1,
wherein the polyethylene further satisfies one or more of the following conditions (a3) and (a4):

(a3) melt flow rate ratio ($MI_5/MI_{2.16}$): 3 to 4.5
(a4) molecular weight distribution (PDI): 9 to 11.

**9.** The polyethylene resin composition of Claim 1,
wherein the polyethylene resin composition has Tc-onset of 121 °C or higher and 130 °C or lower.

**10.** The polyethylene resin composition of Claim 1,
wherein the polyethylene resin composition has a crystallinity of 68 to 80%.

**11.** A preparation method of the polyethylene resin composition of Claim 1 comprising a step of mixing a polyethylene satisfying the following conditions (a1) and (a2), a nucleating agent, and a lubricant,

wherein the nucleating agent and the lubricant contain a cation of the same metal,
the metal is selected from the group consisting of Group 2 and Group 12 metals, and
the cation of the metal is comprised in an amount of 500 to 2,500 ppm based on a total weight of polyethylene:

(a1) density measured at 23 °C according to the ISO 1183-2 method: more than 0.960 $g/cm^3$ and 0.975 $g/cm^3$ or less, and
(a2) melt index measured at 190 °C under a load of 2.16 kg according to the ISO 1133 method: 0.72 to 1.2 g/10min.

**12.** The preparation method of the polyethylene resin composition of Claim 11,
wherein the polyethylene is prepared by polymerizing ethylene monomers in the presence of a catalyst comprising a first transition metal compound of the following Chemical Formula 2 and a second transition metal compound of the following Chemical Formula 3 while introducing hydrogen gas in an amount of 150 to 300 ppm based on a total weight of the ethylene monomers:

[Chemical Formula 2] $(Cp^1R^a)_m(Cp^2R^b)M^1Z^1_{3-m}$

in Chemical Formula 2,

$M^1$ is a Group 4 transition metal;
$Cp^1$ and $Cp^2$ are the same as or different from each other, and are each independently any one selected from the group consisting of cyclopentadienyl, indenyl, 4,5,6,7-tetrahydro-1-indenyl, and fluorenyl radicals, wherein they are unsubstituted or substituted with a $C_{1-20}$ hydrocarbon group;
$R^a$ and $R^b$ are the same as or different from each other, and are each independently hydrogen, $C_{1-20}$ alkyl, $C_{2-20}$ alkenyl, $C_{2-20}$ alkynyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, or $C_{6-20}$ aryloxy;

$Z^1$ is a halogen atom, $C_{1-20}$ alkyl, $C_{2-20}$ alkenyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, $C_{7-40}$ arylalkoxy, or a substituted or unsubstituted amino group; and m is 1 or 0;

[Chemical Formula 3] $(Cp^3R^c)_nB^1(Cp^4R^d)M^2Z^2_{3-n}$

in Chemical Formula 3,

$M^2$ is a Group 4 transition metal;
$Cp^3$ and $Cp^4$ are the same as or different from each other, and are each independently any one selected from the group consisting of cyclopentadienyl, indenyl, 4,5,6,7-tetrahydro-1-indenyl, and fluorenyl radicals, wherein they are unsubstituted or substituted with a $C_{1-20}$ hydrocarbon group;
$R^c$ and $R^d$ are the same as or different from each other, and are each independently hydrogen, $C_{1-20}$ alkyl, $C_{2-20}$ alkenyl, $C_{2-20}$ alkynyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, or $C_{6-20}$ aryloxy;
$Z^2$ is a halogen atom, $C_{1-20}$ alkyl, $C_{2-20}$ alkenyl, $C_{1-20}$ alkoxy, $C_{2-20}$ alkoxyalkyl, $C_{6-20}$ aryl, $C_{7-40}$ arylalkyl, $C_{8-40}$ arylalkenyl, $C_{7-40}$ alkylaryl, $C_{7-40}$ arylalkoxy, or a substituted or unsubstituted amino group;
$B^1$ is one or a combination of carbon, germanium, silicon, phosphorus or nitrogen atom-containing radicals that cross-link the $Cp^3R^c$ ring and the $Cp^4R^d$ ring, or cross-link the $Cp^4R^d$ ring to $M^2$; and
n is 1 or 0.

**13.** The preparation method of the polyethylene resin composition of Claim 12, wherein the first transition metal compound is represented by one of the following structural formulae:

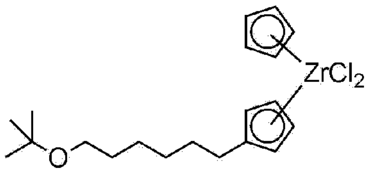
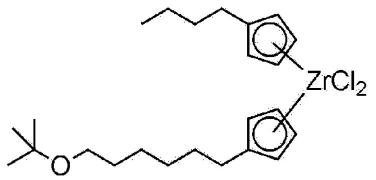
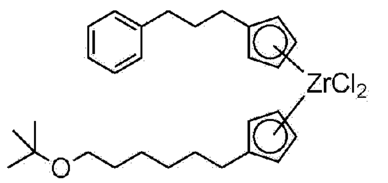
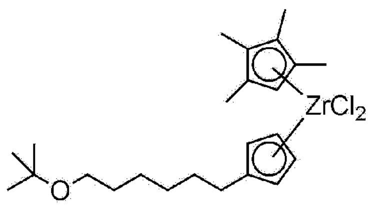
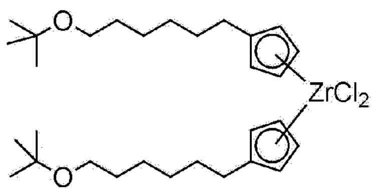
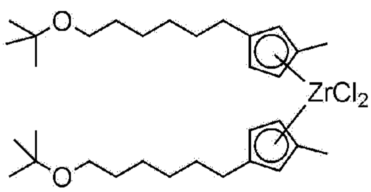
.

**14.** The preparation method of the polyethylene resin composition of Claim 12, wherein the second transition metal compound is represented by one of the following structural formulae:

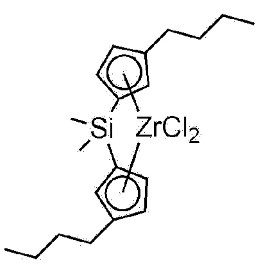
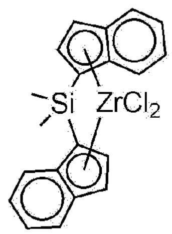
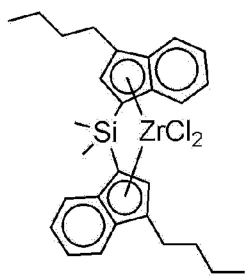
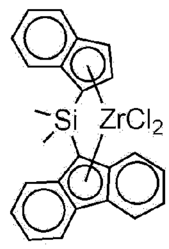

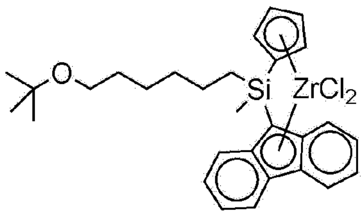
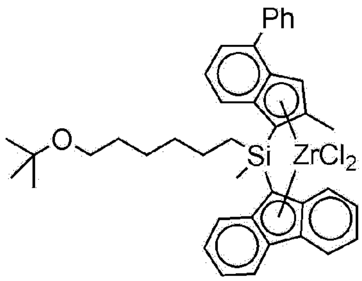
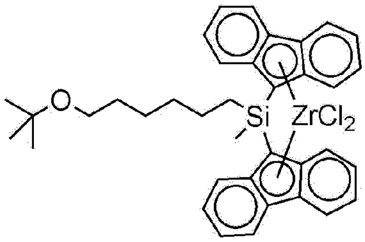
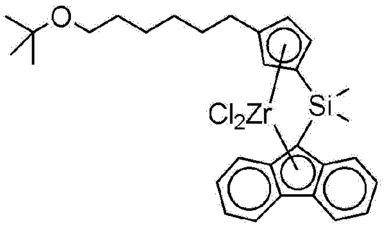
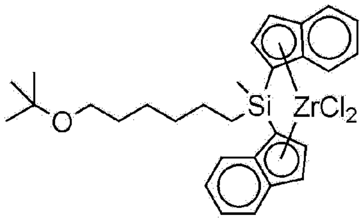
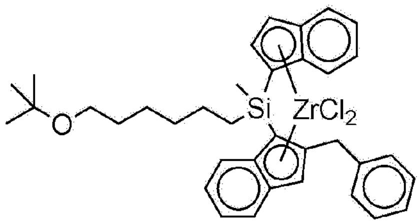
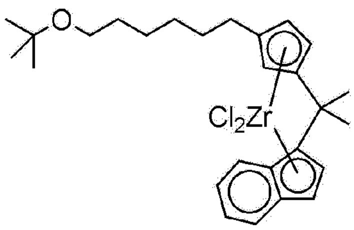
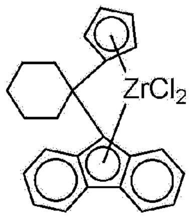
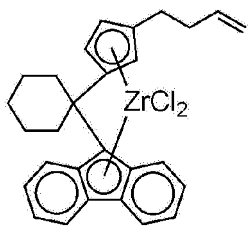
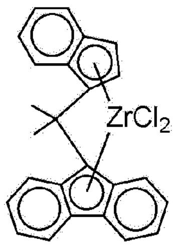

**15.** A polyethylene resin film comprising the polyethylene resin composition of Claim 1 and satisfying the following conditions (b1) and (b2):

(b1) internal haze measured according to ASTM D1003 with a film thickness of 25 $\mu$m: 6.5% or less, and
(b2) WVTR measured according to ASTM F 1249-90 with a film thickness of 25 $\mu$m: 5500 mg/$m^2$·day or less.

【FIG. 1】

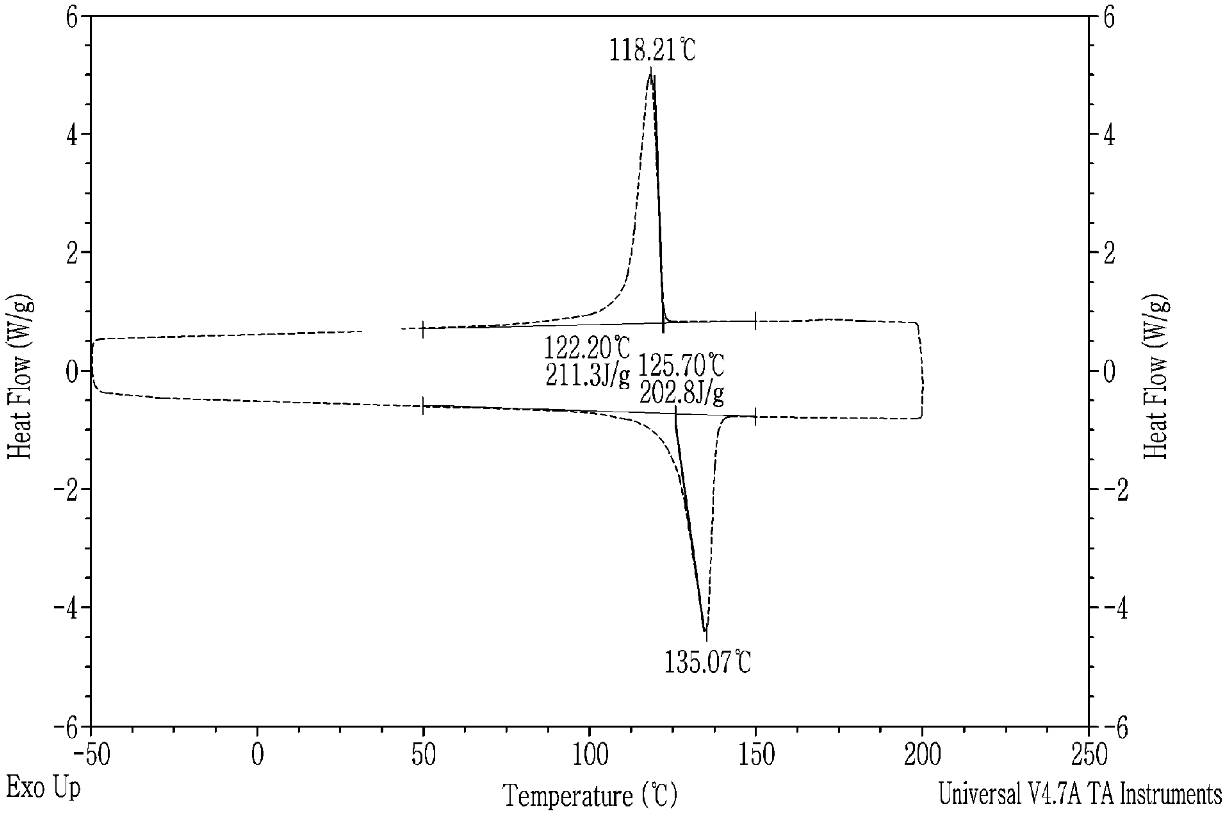
118.21℃
122.20℃
211.3J/g
125.70℃
202.8J/g
135.07℃
Heat Flow (W/g)
Temperature (℃)
Exo Up
Universal V4.7A TA Instruments
6
4
2
0
-2
-4
-6
-50
0
50
100
150
200
250

**INTERNATIONAL SEARCH REPORT**

International application No.
**PCT/KR2022/013030**

**A. CLASSIFICATION OF SUBJECT MATTER**

**C08L 23/06**(2006.01)i; **C08K 5/10**(2006.01)i; **C08K 5/098**(2006.01)i; **C08F 10/02**(2006.01)i; **C08F 4/6592**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 23/06(2006.01); C08F 10/00(2006.01); C08F 110/02(2006.01); C08F 2/00(2006.01); C08F 4/12(2006.01); C08K 3/00(2006.01); C08K 5/00(2006.01); C08K 5/098(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 용융 지수(melt index), 밀도(density), 핵제(nucleating agent), 활제(lubricant)

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0081457 A (HANWHA TOTAL PETROCHEMICAL CO., LTD.) 12 July 2017 (2017-07-12) See claims 1-9; and paragraphs [0016]-[0044]. | 1-15 |
| A | KR 10-2004-0012740 A (MILLIKEN & COMPANY) 11 February 2004 (2004-02-11) See paragraphs [0027]-[0028]; example 1; and tables 1-2. | 1-15 |
| A | KR 10-2017-0075530 A (LG CHEM, LTD.) 03 July 2017 (2017-07-03) See entire document. | 1-15 |
| A | WO 2020-115622 A1 (NOVA CHEMICALS (INTERNATIONAL) S.A.) 11 June 2020 (2020-06-11) See entire document. | 1-15 |
| A | KR 10-2227653 B1 (SIMON CO., LTD.) 16 March 2021 (2021-03-16) See entire document. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2022** | **02 December 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/013030**

| Patent document cited in search report | Publication date (day/month/year) | Patent family member(s) | Publication date (day/month/year) |
|---|---|---|---|
| KR 10-2017-0081457 A | 12 July 2017 | CN 106939098 A | 11 July 2017 |
| | | CN 106939098 B | 13 September 2019 |
| | | KR 10-1862917 B1 | 30 May 2018 |
| KR 10-2004-0012740 A | 11 February 2004 | CN 1500117 A | 26 May 2004 |
| | | CN 1500117 C | 27 December 2006 |
| | | EP 1379368 A2 | 14 January 2004 |
| | | EP 1379368 B1 | 27 December 2006 |
| | | JP 2004-525227 A | 19 August 2004 |
| | | JP 4046610 B2 | 13 February 2008 |
| | | US 2003-0027908 A1 | 06 February 2003 |
| | | US 2003-0149150 A1 | 07 August 2003 |
| | | US 2004-0132884 A1 | 08 July 2004 |
| | | US 2004-0220311 A1 | 04 November 2004 |
| | | US 6100525 A | 08 August 2000 |
| | | US 6111254 A | 29 August 2000 |
| | | US 6114696 A | 05 September 2000 |
| | | US 6114697 A | 05 September 2000 |
| | | US 6198100 B1 | 06 March 2001 |
| | | US 6201242 B1 | 13 March 2001 |
| | | US 6599971 B2 | 29 July 2003 |
| | | US 6794433 B2 | 21 September 2004 |
| | | US 7144939 B2 | 05 December 2006 |
| | | US 7332536 B2 | 19 February 2008 |
| | | WO 02-078924 A2 | 10 October 2002 |
| | | WO 02-078924 A3 | 27 February 2003 |
| KR 10-2017-0075530 A | 03 July 2017 | CN 108290971 A | 17 July 2018 |
| | | CN 108290971 B | 10 November 2020 |
| | | EP 3339332 A1 | 27 June 2018 |
| | | EP 3339332 A4 | 24 October 2018 |
| | | KR 10-2019467 B1 | 04 November 2019 |
| | | US 10570221 B2 | 25 February 2020 |
| | | US 2018-0282442 A1 | 04 October 2018 |
| | | WO 2017-111513 A1 | 29 June 2017 |
| WO 2020-115622 A1 | 11 June 2020 | CN 113166282 A | 23 July 2021 |
| | | EP 3891189 A1 | 13 October 2021 |
| | | JP 2022-510000 A | 25 January 2022 |
| | | KR 10-2021-0100096 A | 13 August 2021 |
| | | US 2022-0056248 A1 | 24 February 2022 |
| KR 10-2227653 B1 | 16 March 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210142954
- KR 1020220108434


### Non-patent literature cited in the description


- Influence of the Origin of Polyamide 12 Powder on the Laser Sintering Process and Laser Sintered Parts. *Appl. Sci.,* 2017, vol. 7 (5), 462, https://doi.org/10.3390/app7050462
- Influence of the Origin of Polyamide 12 Powder on the Laser Sintering Process and Laser Sintered Parts. *Appl. Sci.,* 2017, vol. 7 (5), 462